# EUROPEAN PATENT APPLICATION

(11) **EP 1 726 433 A1**
(43) Date of publication of application: **29.11.2006**
(21) Application number: 06008195.7
(22) Date of filing: 20.04.2006
(51) Int. Cl.: B32B 17/10, G06K 19/077, B60J 1/02, B60R 13/10, G09F 3/18, G08B 13/24, H01Q 1/12

(54) **Panel and panel manufacturing method**

(30) Priority: 20.04.2005 JP 2005122291
(71) Applicant: Nippon Sheet Glass Company, Limited, Tokyo 105-8552 (JP)
(72) Inventor: Kokuryo, Kazuto, Shiga 520-2144 (JP); Ohara, Shohei, Minato-ku Tokyo 105-8552 (JP)
(74) Representative: HOFFMANN EITLE

(57) **Abstract**

A glass panel has a sheet glass which is a tempered glass, a frame element which covers a peripheral edge portion of the base material, and an electronic tag embedded in the frame element. The frame element is made of an injection molded resin. The electronic tag is coated with a coating material. The electronic tag coated with the coating material is affixed to the peripheral edge portion of the sheet glass for attachment thereto. A thermoplastic resin is raised as a resin making up the coating material, the thermoplastic resin including polyethylene, polypropylene, polystyrene, acrylonitrile-butadiene, styrene copolymer, polycarbonate, polyamide resin, methacrylate resin, polyethylene terephthalate, polyvinyl butyral, polyvinyl chloride and the like.

## Description

### BACKGROUND OF THE INVENTION

### 1. Field of the Invention

The present invention relates to a panel having a function to transmit an identification signal and a manufacturing method of the panel.

### 2. Related Art

In recent years, management technologies making use of electronic tags (also referred to as radio frequency identification or RFID tags) have been spreading. Electronic tags are used so that they are affixed to surfaces of products by adhesive or pressure sensitive adhesive double coated tapes. It is proposed that electronic tags be attached to a wide range of articles from small items such as parcels to consumer durables such as automobiles and domestic building materials so as to obtain various types of information therefrom via radio communication for use for control the articles.

For example, JP-A-10-171955 discloses an identification system in which an identification tag on which vehicle identification information is written is bonded to an inner side of a windshield of a motor vehicle, so as to control the vehicle by making use of the identification information so written.

As in the system disclosed in JP-A-10-171955, an electronic tag is easy to be handled when it is affixed to an internal surface of a windshield of a motor vehicle. When the electronic tag is affixed to the internal surface of the windshield of the motor vehicle, however, there may be caused a risk where the electronic tag is deteriorated or damaged by an external factor, whereby the function thereof is lost.

In addition, when the electronic tag is affixed to the internal surface of the windshield of the motor vehicle, since the electronic tag becomes visible through the windshield from the outside and inside the vehicle the electronic tag becomes visible directly from an occupant, leading to a risk where the appearance of the motor vehicle is damaged from an aesthetic point of view.

The invention was made in view of the problems, and an object thereof is to attach the electronic tag to a position where the function of the electronic tag and the appearance of the vehicle from the aesthetic point of view are lest damaged.

According to an aspect of the invention, there is provided a panel having a base material, an electronic tag disposed at a peripheral edge portion of the base material and coated at least partly with a coating material, and a frame element adapted to cover the peripheral edge portion of the base material and the electronic tag. According to this aspect of the invention, the electronic tag can be attached to the panel while the function and appearance are least damaged.

According to another aspect of the invention, there is provided a panel having a base material, a frame element adapted to cover a peripheral edge portion of the base material, and an electronic tag embedded at least partly in the frame element and coated at least partly with a coating material. According to this aspect of the invention, the electronic tag can be attached to the panel while the function and appearance are least damaged.

The coating material may be made at least partly of a resin. In addition, the resin is suitably a thermoplastic resin. Additionally, the frame element may be made at least partly of an injection molded resin.

In the event that the coating material is made at least partly of resin and the frame element is made at least partly of the injection molded resin, when the resin, which is the material of the frame element, sets, the coating material is fused to the resin, whereby the electronic tag coated with the coating material is fixed to the frame element strongly.

The base material may be a tempered glass. In addition, the base material may be made up of a pair of sheet glasses, and an interlayer film may be further disposed between the pair of sheet glasses, so as to join the pair of sheet glasses together. Additionally, the base material may have a shape of an automotive window.

According to a further aspect of the invention, there is provided a panel manufacturing method for manufacturing a panel including a base material, a frame element which covers a peripheral edge portion of the base material and an electronic tag which is embedded at least partly in the frame element, the panel manufacturing method having the steps of affixing the electronic tag to the base material for attachment thereto, disposing a mold for the frame element so as to cover the electronic tag, and injecting a resin material of the frame element into an interior of the mold.

According to this aspect of the invention, the electronic tag can be attached to the panel while the function and appearance are least damaged. In addition, since the electronic tag is affixed to the base material for attachment thereto, when injecting the resin material of the frame element into the interior of the mold, the electronic tag is prevented from flowing to move.

According to another aspect of the invention, there is provided a panel manufacturing method for manufacturing a panel including a base material, a frame element which covers a peripheral edge portion of the base material and an electronic tag which is embedded at least partly in the frame element, the panel manufacturing method having the steps of disposing the electronic tag in an interior of a mold for the frame element, disposing the mold near the peripheral edge portion of the base material, and injecting a resin material of the frame element into an interior of the mold.

According to this aspect of the invention, the electronic tag can be attached to the panel while the function and appearance are least damaged.

The step of disposing the electronic tag in the interior of the mold for the frame element may include a step of affixing the electronic tag to an inner side of the mold for the frame element for attachment thereto. By adopting this configuration, when injecting the resin material of the frame element into the interior of the mold, the electronic tag is prevented from flowing to move.

Note that what results from combinations of the constituent elements described in the aforesaid aspects of the invention can be contained in the scope of the invention which is to be patented through this patent application.

According to the invention, since the frame element covers the electronic tag or the electronic tag is embedded in the frame element, the appearance of the panel from the aesthetic point of view and the function of the electronic tag are made difficult to be damaged.

### BRIEF DESCRIPTION OF THE DRAWINGS

Fig. 1 is a front view of a glass panel according to a first embodiment of the invention.
Fig. 2 is a partial sectional view of the glass panel taken along the line II-II in Fig. 1.
Figs. 3A to 3C are drawings which show external appearances of an electronic tag used in the glass panel in Fig. 1, in which Fig. 3A is a plan view, Fig. 3B is a front view, and Fig. 3C is a side view of the electronic tag.
Fig. 4 is a block diagram which shows an functional configuration of a semiconductor chip which makes up the electronic tag used in the glass panel shown in Fig. 1.
Figs. 5A to 5C are sectional views which describe a manufacturing process of the glass panel shown in Fig. 1.
Fig. 6 is a sectional view of the glass panel shown in Fig. 1 which results when the glass panel is joined to a stationary body.
Fig. 7 is a sectional view which describes a manufacturing process of a glass panel according to a second embodiment of the invention.
Fig. 8 is a sectional view which describes a manufacturing process of a glass panel according to a third embodiment of the invention.

### DETAILED DESCRIPTION OF THE PREFERRED EMBODIMENTS

Hereinafter, embodiments of the invention will be described individually by reference to the drawings. Each of the drawings is intended to represent a positional relationship of individual constituent members and hence does not necessarily represent an actual dimensional relationship thereof. In addition, in each of the embodiments, like reference numerals are imparted to like or corresponding constituent elements, so as to omit a repetition of a like or corresponding description appropriately.

### (First Embodiment)

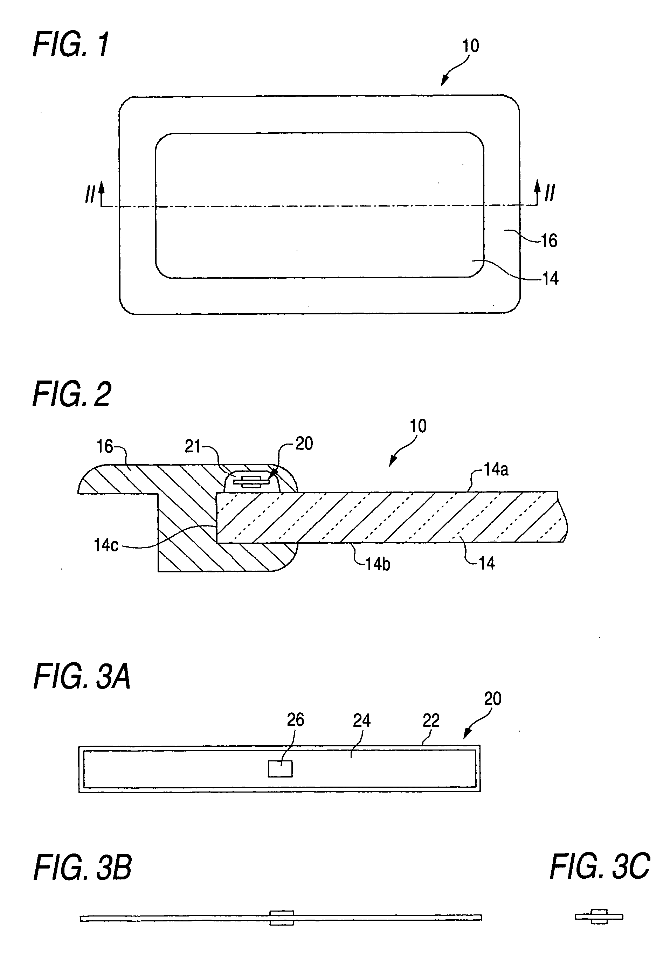

Figs. 1 and 2 show a glass panel 10 according to a first embodiment of the invention, in which Fig. 1 is a front view and Fig. 2 is a partial sectional view taken along the line II-II in Fig. 1. The glass panel 10 mainly includes a sheet glass 14, a frame element 16 and an electronic tag 20.

The sheet glass 14 is made of a tempered glass. The tempered glass is a glass of which the strength is increased by imparting a compression stress onto surfaces thereof. The tempered glass is manufactured, for example, by heating a glass to a temperature near its softening point and thereafter quenching surfaces of the glass by blowing a flow of pressurized air against the surfaces thereof. By quenching the surfaces of the glass, a compression stress layer is formed on the surfaces of the glass and a tensile stress layer is formed in an interior thereof.

Note that when a force exceeding the limit of a compression stress at the surface of the tempered glass is applied to part thereof, a network of cracks quickly propagates all over the surface of the tempered glass, and the glass is fractured into small pieces while remaining as it is without spreading out in flying pieces. Since the tempered glass does not spread in flying pieces even when broken, the glass panel 10 made up of the tempered glass is suitable for use as an automotive window material.

The frame element 16 is a member which covers a peripheral edge portion of the sheet glass 14 and the electronic tag 20. The frame element 16 has a function to close a gap between the glass panel 10 and a stationary body such a vehicle body when the glass panel 10 is mounted on the stationary body. The frame element 16 is formed of a suitably soft resin, for example, a thermoplastic resin such as polyvinyl chloride or PVC through injection molding. Note that the material of the frame element 16 may be made of other elastic materials, for example, an elastomer such as a synthetic resin.

The electronic tag 20 transmits identification information recorded in an interior thereof as a reply to a request made from the outside through radio communication. A detailed construction of the electronic tag 20 will be described later on. In addition, the electronic tag 20 is coated with a coating material 21. Consequently, the fused resin material of the frame element 16 is not brought into direct contact with the electronic tag 20. Due to this, a damage to the electronic tag 20 due to the fused resin material can thus be suppressed. The electronic tag 20 coated with the coating material 21 is affixed to a peripheral edge portion of the sheet glass 14 on one side 14a thereof by, for example, a pressure sensitive adhesive double coated tape for attachment thereto.

The coating material 21 is made of a thermoplastic resin such as polyethylene, polypropylene, polystyrene, acrylonitrile-butadiene, styrene copolymer, polycarbonate, polyamide resin, methacrylate resin, polyethylene terephthalate, polyvinyl butyral, or PVC.

The electronic tag 20 coated with the coating material 21 can be obtained, for example, by a method in which the coating material 21 in the form of liquid is coated or dropped on the electronic tag 20 and the coating material 21 so coated or dropped is caused to set thereafter, a method in which the electronic tag 20 is embedded in the coating material 21 in the form of liquid which is filled in a mold and the coating material 21 is molded and set thereafter, or a method in which the electronic tag 20 is embedded in the coating material 21 which is softened by the application of heat or the like, and thereafter, the coating material 21 is cooled to set.

Figs. 3A to 3C show external appearances of the electronic tag 20, wherein Fig. 3A is a plan view, Fig. 3B is a front view and Fig. 3C is a side view of the electronic tag 20. The electronic tag 20 includes an insulation film 22 which is formed into a strip-like shape, an antenna 24 formed on both side of the insulation film 22 for transmitting and receiving radio waves such as microwaves and the semiconductor chip 26 which is a radio chip which is connected to the antenna 24 and which transmits predetermined data as a reply to a request made from the outside through radio communication via the antenna 24. In addition, the antenna 24 and the semiconductor chip 26 may be provided only on one side of the insulation film 22.

The electronic tag 20 is configured such that data are stored in a memory circuit within the semiconductor chip 26, so that the data so stored can be read out in a non-contact fashion by radio waves such as microwaves or UHF waves. Due to this, in general, the electronic tag 20 can store a large volume of data compared to bar codes or two-dimensional bar codes. In addition, since the electronic tag 20 is different from bar codes or two-dimensional bar bodes in that it is not a printed matter, it is difficult to alter the data stored therein.

The antenna 24 is formed by coating on the resin insulation film 22 a conductive material such as a conductive paste made of mainly copper or silver. The antenna 24 is designed so as to transmit and receive a radio wave of a specific frequency such as a microwave of 2.45GHz with good efficiency. While one example of the shape of the antenna is a loop, the antenna 24 may be formed into other shapes.

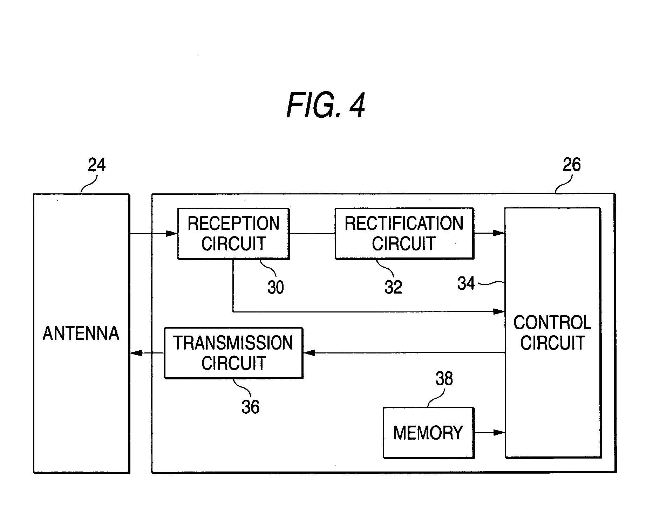

The semiconductor chip 26 is manufactured by, for example, forming a circuit as illustrated in a functional block diagram shown in Fig. 4, which will be described later on, on a single crystal silicone substrate. Since the electronic tag 20 is configured such that the thin antenna 24 is formed on the side of the insulation film 22, the tag becomes thin and flexible. The semiconductor chip 26 is a so-called passive semiconductor chip which is driven using an electromotive force generated by radio waves received from the outside. Since the passive radio chip like this can be made smaller than an active one having a power supply incorporated therein by such an extent that the former has no power supply incorporated therein, even in the event that the passive radio chip is provided on an article such as the glass panel 10 in which the external appearance is important, the appearance of the glass panel 10 is not damaged badly from the aesthetic point of view. The antenna 24 and the semiconductor chip 26 may be sealed by a resin.

Fig. 4 is a block diagram which illustrates the functional configuration of the semiconductor chip 26. The semiconductor chip 26 includes a reception circuit 30, a rectification circuit 32, a control circuit 34, a transmission circuit 36 and a nonvolatile memory 38. The reception circuit 30 outputs a radio wave received by the antenna 24 to the rectification circuit 32 and generates a clock signal from the radio wave received by the antenna 24 for output to the control circuit 34. The rectification circuit 32 rectifies the radio wave transmitted from the reception circuit 30 and converts the radio wave so rectified into electric power which constitutes a drive source for the control circuit 34, outputting the electric power so converted to the control circuit 34.

When the clock signal is inputted thereinto from the reception circuit 30, the control circuit 34 fetches predetermined data from the memory 38 and outputs a information signal corresponding to the data so fetched together with a transmission signal to the transmission circuit 36. The transmission circuit 36 modulates the transmission signal inputted from the control circuit 34 with the information signal and transmits the signal so modulated to the outside via the antenna 24. The signal so transmitted is received by read equipment (not shown) placed at an external side.

At least a specific identification number is written in the memory 38, and in addition to the number, various types of data can be stored in the memory 38. The identification number can be used to control the glass panel 10 in which the electronic tag 20 is provided through radio transmission of the number. As examples of data that are stored in the memory 38, there are raised production-related attributes such as production number, production period, production site, production process and distribution history of the glass panel 10, as well as production-related attributes such as constituents or function of the glass. However, the data to be stored in the memory 38 are not limited thereto.

In the semiconductor chip 26, various kinds of frequencies which are used in general can be used, and radio waves can be used whose frequencies include, for example, 135kHz, 13.56MHz, 433MHz, 869MHz, 915MHz or 2.45GHz. These radio waves has their own characteristics. Consequently, the electronic tag 20 is preferably used to match the characteristics of radio waves that are provided by the respective frequencies. For example, since a radio wave of 869MHz enables a long distance communication, the radio wave is convenient when used so that the electronic tag 20 is distant from the read equipment. In addition, the electronic tag 20 which uses the radio wave of 2.45GHz can be made smaller in size.

While, in this embodiment, the semiconductor chip 26 is a read-only chip, a semiconductor chip such as an EEPROM which can both read and write. In the event of a semiconductor chip which can both read and write, in case it is designed that data can be added to the memory at each stage of a flow of distribution of the glass panel 10, the control of distribution history can be facilitated further.

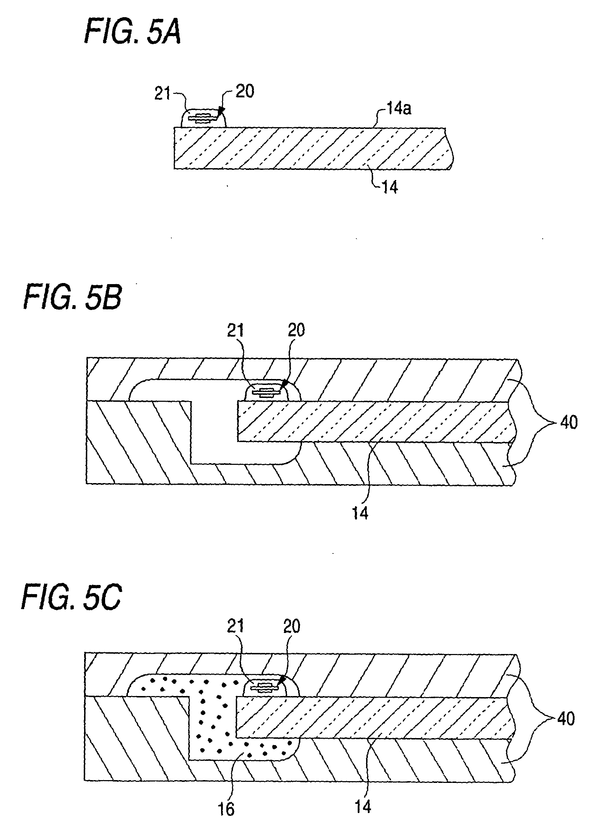

Figs. 5A to 5C are drawings which describe a manufacturing process of the glass panel 10 according to the first embodiment of the invention. The glass panel 10 is manufactured as will be described below. Firstly, the electronic tag 20 coated with the coating material 21 is bonded to the peripheral edge portion of the sheet glass 14 on the side 14a thereof using, for example, a pressure sensitive adhesive double coated tape (Fig. 5A).

While the electronic tag 20 coated with the coating material 21 may be bonded to any position in the peripheral edge portion of the side 14a, the electronic tag 20 is preferably bonded to a position which lies far away from a resin material injection port of a mold 40 that will be used in a subsequent step. In the event that the electronic tag 20 is disposed at a position far away from the resin material injection port of the mold 40, the separation of the electronic tag 20 from the side 14a due to an injection pressure of resin material can be suppressed.

Next, the mold 40 for a frame element 16 to be molded is disposed near the peripheral edge portion of the sheet glass 14 (Fig. 5B), and a resin material for a frame element 16 is injected into an interior of the mold 40. This resin material is in the form of liquid. The resin material so injected is brought into contact with the coating material 21 to thereby fuse a surface of the coating material 21. Following this, the resin material is filled in the interior of the mold 40 (Fig. 5C), and the resin material is cooled to set in that state.

As this occurs, part of the coating material 21 is fused to the resin material. Thus, the electronic tag 20 coated with the coating material 21 is strongly joined to a frame element 16 so molded. Following this, when the mold 40 is separated from the sheet glass 14, a glass panel 10 as shown in Figs. 1 and 2 is manufactured.

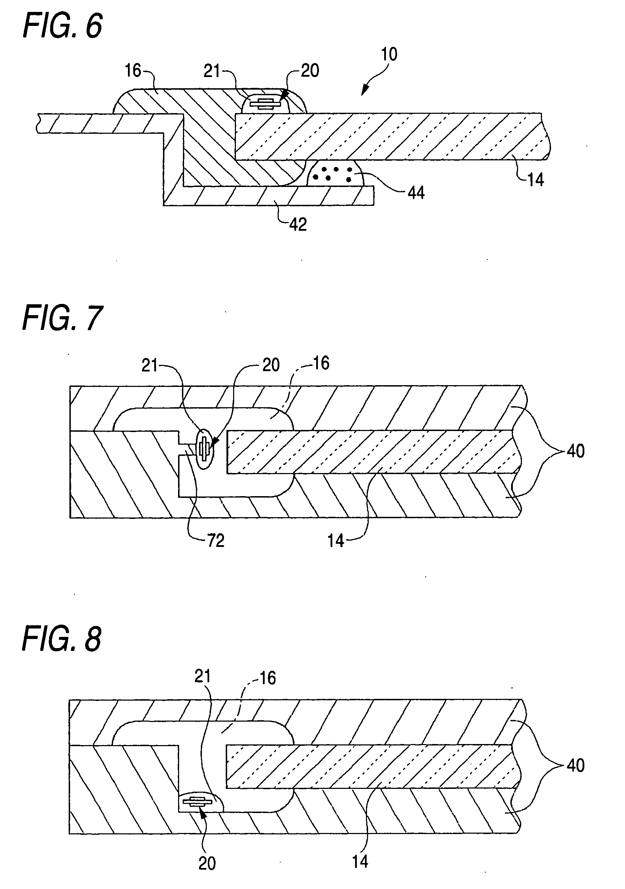

The glass panel 10 so manufactured is then mounted on a stationary body 42. Fig. 6 is a sectional view which shows a state resulting when the glass panel 10 is joined to the stationary body 42. The glass panel 10 is mounted on the stationary body 42 by being joined to the stationary body 42 via an adhesive 44, as shown in Fig. 6, for example.

### (Second Embodiment)

Fig. 7 is a drawing which describes a manufacturing process of a glass panel according to a second embodiment of the invention. In this embodiment, a support post 72 is provided in the interior of a mold 40 for a frame element 16. The glass panel of this embodiment is manufactured as will be described below. Firstly, an electronic tag 20 coated with a coating material 21 is affixed to the support post 72 for attachment thereto.

Next, as shown in Fig. 7, the mold 40 is disposed near a peripheral edge portion of a sheet glass 14. Then, a resin material for a frame element 16 is injected into the interior of the mold 40. After the resin material has been filled in the interior of the mold 40, the resin material so filled is cooled to set in that state. Following this, the mold 40 is separated from the sheet glass 14.

Note that in this embodiment, the bond strength between the coating material 21 and the support post 72 is made smaller than a joining strength with which the coating material 21 is fused to the resin material of the frame element 16. By adopting this configuration, the electronic tag 20 coated with the coating material 21 is also separated from the support post 72 when the mold 40 is separated from the sheet glass 14.

### (Third Embodiment)

Fig. 8 is a drawing which describes a manufacturing process of a glass panel according to a third embodiment of the invention. The glass panel according to this embodiment is manufactured as will be described below. Firstly, an electronic tag 20 coated with a coating material 21 is affixed to a surface of an inner side of a mold 40 for attachment thereto.

Next, as shown in Fig. 8, the mold 40 is disposed near a peripheral edge portion a sheet glass 14. Then, a resin material for a frame element 16 is injected into an interior of the mold 40. After the resin material has been filled in the interior of the mold 40, the resin material so filled is cooled to set in that state. Following this, the mold 40 is separated from the sheet glass 14.

Note that in this embodiment, the bond strength between the coating material 21 and the mold 40 is made smaller a joining strength with which the coating material 21 is fused to the resin material of the frame element 16. By adopting this configuration, the electronic tag 20 coated with the coating material 21 is also separated from the mold 40 when the mold 40 is separated from the sheet glass 14.

Thus, while the invention has been described heretofore based on the individual embodiments of the invention, the invention is not limited to those embodiments but can be modified variously in design or the like based on knowledge of those skilled in the art, and embodiments resulting from such modifications can be contained in the scope of the invention.

For example, while, in the manufacturing method of the glass panel 10 according to the first embodiment, the electronic tag 20 coated with the coating material 21 is bonded to the sheet glass 14, instead of this, the resin material of the frame element 16 may be injected into the interior of the mold so that the electronic tag 20 coated with the coating material 21 is disposed at an arbitrary position in the interior of the mold 40. By adopting this configuration, the step of bonding the electronic tag 20 to the sheet glass 14 can be omitted, thereby making it possible to facilitate the manufacturing process of the glass panel.

In addition, while, in the manufacturing method of the glass panel 10 according to the first embodiment, the electronic tag 20 coated with the coating material 21 is bonded to the side 14a of the sheet glass 14, instead of this, the electronic tag 20 coated with the coating material 21 may be bonded to the other side 14b of the sheet glass 14 or an end face 14c of the sheet glass 14 shown in Fig. 2.

Additionally, while, in each of the embodiments, the base material is made up of the single sheet glass 14, instead of this, the base material is made up of a pair of sheet glasses, and an interlayer film may be provided between the pair of sheet glasses so as to join the pair of sheet glasses together. The structure in which the interlayer film is held between the pair of sheet glasses is referred to as a laminated glass. Since the laminated glass is such that the pair of sheet glasses are bonded together with high strength via the interlayer film, when broken, broken glass fragments are made difficult to spread in flying pieces. Due to this, the glass panel made up of the laminated glass is suitable for use as an automotive window material.

In addition, the base material may be made up of not only the sheet glass but also a resin base material made of, for example, polycarbonate, or a ceramic base material made of, for example, quartz. Furthermore, the pair of base materials may be made up of a combination of a sheet glass and a resin base material, a combination of a sheet glass and a ceramic base material, or a combination of a resin base material and a ceramic base material. In addition, the visible light transmission of the base material is not a matter of interest. The base material may be a translucent material such as a frosted glass.

## Claims

1. A panel comprising:
a base material;
an electronic tag disposed at a peripheral edge portion of the base material and coated at least partly with a coating material; and
a frame element adapted to cover the peripheral edge portion of the base material and the electronic tag.

2. A panel comprising:
a base material;
a frame element adapted to cover a peripheral edge portion of the base material; and
an electronic tag embedded at least partly in the frame element and coated at least partly with a coating material.

3. A panel according to claim 1 or 2, wherein the coating material is made at least partly of a resin.

4. A panel according to claim 3, wherein the resin is a thermoplastic resin.

5. A panel according to any one of the preceding claims, wherein the frame element is made at least partly of an injection molded resin.

6. A panel according to any one of the preceding claims, wherein the base material is a tempered glass.

7. A panel according to any one of the preceding claims, wherein the base material is made up of a pair of sheet glasses, and wherein an interlayer film is further disposed between the pair of sheet glasses, so as to join the pair of sheet glasses together.

8. A panel according to any one of the preceding claims, wherein the base material has a shape of an automotive window.

9. A panel manufacturing method'for manufacturing a panel comprising a base material, a frame element which covers a peripheral edge portion of the base material and an electronic tag which is embedded at least partly in the frame element, the panel manufacturing method having the steps of:
affixing the electronic tag to the base material for attachment thereto;
disposing a mold for the frame element so as to cover the electronic tag; and
injecting a resin material of the frame element into an interior of the mold.

10. A panel manufacturing method for manufacturing a panel comprising a base material, a frame element which covers a peripheral edge portion of the base material and an electronic tag which is embedded at least partly in the frame element, the panel manufacturing method having the steps of:
disposing the electronic tag in an interior of a mold for the frame element;
disposing the mold near the peripheral edge portion of the base material; and
injecting a resin material of the frame element into an interior of the mold.

11. A panel manufacturing method according to claim 10, wherein the step of disposing the electronic tag in the interior of the mold for the frame element comprises a step of affixing the electronic tag to an inner side of the mold for the frame element for attachment thereto.
